# EUROPÄISCHE PATENTSCHRIFT

(11) **EP 3 950 543 B1**
(45) Veröffentlichungstag und Bekanntmachung des Hinweises auf die Patenterteilung: **01.10.2025**
(21) Anmeldenummer: 20189305.4
(22) Anmeldetag: 04.08.2020
(51) Int. Cl.: B65G 17/08, B65G 17/46

(54) **FÖRDERVORRICHTUNG FÜR EINE VERPACKUNGSMASCHINE, TRANSPORTVORRICHTUNG ZUM TRANSPORTIEREN VON PRODUKTEN SOWIE VERPACKUNGSMASCHINE**
PACKAGING MACHINE, CONVEYING DEVICE FOR A PACKAGING MACHINE AND TRANSPORT DEVICE FOR TRANSPORTING PRODUCTS
DISPOSITIF DE TRANSPORT POUR UNE MACHINE D'EMBALLAGE, DISPOSITIF DE TRANSPORT DESTINÉ AU TRANSPORT DES PRODUITS, AINSI QUE MACHINE D'EMBALLAGE

(43) Veröffentlichungstag der Anmeldung: 09.02.2022
(73) Patentinhaber: Illinois Tool Works INC., Glenview, IL 60025 (US)
(72) Erfinder: KORTE, Hartmut, 49565 Bramsche (DE); Wöhle, Linus, 48480 Schapen (DE)
(74) Vertreter: Meissner Bolte Partnerschaft mbB

(56) Entgegenhaltungen:
- EP-A1- 0 175 483
- EP-A1- 0 369 955
- EP-A1- 1 477 434
- EP-A1- 2 112 097
- WO-A1-2008/067684
- WO-A1-2015/042624
- DE-A1- 3 515 754
- FR-A1- 2 108 942
- US-B1- 6 695 135

## Beschreibung

Die vorliegende Erfindung betrifft allgemein Verpackungsanlagen und insbesondere Transport- und Fördervorrichtungen insbesondere zum Transportieren von Produkten in Verpackungslinien einer Verpackungsanlage.

Verpackungslinien der hierin berücksichtigten Art weisen in der Regel verschiedene Verpackungseinheiten oder Verpackungsmaschinen auf, die beispielsweise bereits gefüllte Verpackungen (hierin allgemein auch als "Produkte" bezeichnet) weiterverarbeiten, indem beispielsweise die gefüllten Verpackungen/Produkte zu Einheiten zusammengeführt werden oder zum Beispiel mit Strohhalmen, Etiketten oder dergleichen versehen werden.

Da die einzelnen Verpackungsmaschinen innerhalb einer Verpackungslinie in der Regel sequenziell hintereinander angeordnet sind, ist eine Zuführung und Abführung der zu bearbeitenden Produkte zu und von den einzelnen Verpackungsmaschinen mit Hilfe geeigneter Transportvorrichtungen notwendig.

Insbesondere bei Produkten, die drucksensibel sind, sind bei dem Produkttransport insbesondere innerhalb der Verpackungslinie besondere Vorsichtsmaßnahmen zu beachten.

Zum Transport derartiger Produkte ist es allgemein bekannt, Fördervorrichtungen einzusetzen, die mindestens eine in einer Kettenlaufrichtung umlaufende Förderkette aufweisen. In der Regel weist die Förderkette eine Vielzahl von über quer verlaufende Kettenbolzen gelenkig miteinander verbundene Kettenglieder auf.

Des Weiteren ist es bekannt, dass auf die Kettenglieder sogenannte "Tragkappen" aufgesetzt sind, welche eine im Wesentlichen kontinuierliche Auflagefläche bilden. Die Tragkappen weisen häufig einen im Wesentlichen U-förmigen Querschnitt auf und können gelenkig an jeweils einem Kettenbolzen gehalten sein.

Um beispielsweise Faltschachteln oder sonstige Verpackungen, in die ein Produkt eingeführt werden soll, innerhalb einer Verpackungsmaschine zu transportieren, werden in der Regel in einer Ebene umlaufende Förderkette verwendet, die Aufnahmen für die Verpackungen tragen. Da die Ausbildung einer Vielzahl von Aufnahmen konstruktiv aufwändig ist, ist versucht worden, die Verpackungen direkt auf die Förderkette aufzulegen, die zu diesem Zweck eine Vielzahl von sie abdeckenden Tragkappen zur Bildung einer kontinuierlichen Auflagefläche besitzen.

So ist es beispielsweise aus der Druckschrift DE 3 321 018 C2 bekannt, an jedem der die einzelnen Kettenglieder der Förderkette gelenkig miteinander verbindenden Kettenbolzen eine Tragkappe gelenkig zu lagern, die an ihrem vorderen Ende einen in Förderrichtung weisenden konvexen Abschnitt und an ihrem entgegengesetzten hinteren Ende einen komplementären konkaven Abschnitt aufweist, so dass die Förderkette mit den aufgesetzten Tragkappen an den Kettenrädern einer Umlenkung folgen kann. Die Führung der Förderkette erfolgt dabei durch seitliche Führungswände, an denen die Tragkappen entlanglaufen, sowie durch eine untere Lauffläche, auf der die Tragkappen lose aufliegen und über die sie hinweggleiten.

Die Ausbildung der Führungswände sowie der Lauffläche ist jedoch konstruktiv sehr aufwändig. Darüber hinaus sind die Tragkappen an ihrem Abheben von der Lauffläche nicht gehindert, was zu einem unstetigen Lauf der Förderkette und einem unruhigen und ungleichmäßigen Transport der auf der Auflagefläche der Förderkette angeordneten Verpackung führen kann. Dies wird noch dadurch unterstützt, dass die Tragkappen, die jeweils einem Kettenbolzen zugeordnet sind, aufgrund des in der Kette gegebenen Spiels einer Relativbewegung unterliegen können.

Weiter sind aus den Druckschriften WO 2014/196862 A1 und WO 2016/080826 A1 (beide von Polyketting Holding B.V.) umlaufende Förderketten zur Ausbildung eines Speichertisches bekannt.

Insbesondere eigenen sich die zuvor beschriebenen und aus dem Stand der Technik bekannten Fördervorrichtungen nicht für einen besonders "sanften" Transport von Produkten, wie insbesondere drucksensiblen Produkten.

Die Druckschrift EP 2 112 097 A1 betrifft eine gattungsgemässe Vorrichtung und ein Verfahren zum
Überführen von gruppierten Gebindelagen mittels eines kontinuierlich antreibbaren Stetigförderers in die Beladestation einer Transportvorrichtung. Die Beladestation umfasst einen schwenkbaren Bügel, der zum Sichern der Gebindelagen an der dem Stetigförderer zugewandten Seite vorgesehen ist.

Die Druckschrift EP 0 369 955 A1 betrifft eine Fördervorrichtung in Gestalt einer Förderkette mit miteinander gelenkig verbundenen Kettengliedern.

Die Druckschrift WO 2008/067684 A1 betrifft ebenfalls eine Fördervorrichtung in Gestalt einer umlaufenden Förderkette, die eine Vielzahl von über querverlaufende Kettenbolzen um jeweils eine Kettengliedachse gelenkig miteinander verbundene Kettenglieder aufweist.

Die Druckschrift DE 35 15 754 A1 betrifft einen Klemmförderer für den Transport von Behältern mit zwei voneinander beabstandeten, gleichsinnig in Führungen umlaufenden Transportketten, die Mitnehmerelemente aufweisen.

Die Druckschrift US 6,695,135 B1 betrifft aus einem Plastikmaterial gebildete Module eines Transportbands.

Die Druckschrift EP 1 477 434 A1 betrifft ebenfalls eine modular aufgebaute Förderkette mit einer Vielzahl von Kettengliedern aus Kunststoffmaterial.

Die Druckschrift EP 0 175 483 A1 betrifft eine Förderkette mit einsetzbaren Förderelementen.

Die Druckschrift WO 2015/042624 A1 betrifft einen Förderriemen zur Förderung von Kleinteilen, insbesondere von Flaschenverschlüssen. Um eine Förderung der Kleinteile auch über Steigungen ohne Beschädigung der Kleinteile zu ermöglichen, ist vorgesehen, dass der Förderriemen einen Riemenkörper umfasst, wobei der Riemenkörper senkrecht auf seine Längsachse eine zumindest abschnittsweise eckige Querschnittsfläche aufweist.

Die Druckschrift FR 2 108 942 A1 betrifft eine weitere Förderkette.

Der vorliegenden Erfindung liegt die Aufgabe zugrunde, eine Fördervorrichtung in einer oder für eine Verpackungsmaschine mit mindestens einer in einer Kettenlaufrichtung umlaufenden Förderkette anzugeben, wobei mit der Fördervorrichtung insbesondere auch drucksensible Produkte sicher transportiert werden können.

Die vorliegende Erfindung betrifft eine Fördervorrichtung gemäß dem unabhängigen Patentanspruch 1, wobei vorteilhafte Weiterbildungen der erfindungsgemäßen Fördervorrichtung in den abhängigen Ansprüchen 2 bis 9 angegeben sind.

Die Erfindung betrifft ferner einen Speichertisch für eine Verpackungsanlage mit einer solchen Fördervorrichtung, wie im Patentanspruch 10 angegeben.

Schließlich betrifft die Erfindung ferner eine Transportvorrichtung gemäß dem Patentanspruch 11, wobei vorteilhafte Weiterbildungen der Transportvorrichtung in den abhängigen Ansprüchen 12 und 13 angegeben sind.

Demgemäß betrifft die Erfindung insbesondere eine Fördervorrichtung in einer oder für eine Verpackungsmaschine, wobei die Fördervorrichtung mindestens eine in einer Kettenlaufrichtung umlaufende Förderkette aufweist, die eine Vielzahl von über quer verlaufenden Kettenbolzen um jeweils eine Kettengliedachse gelenkig miteinander verbundene Kettenglieder aufweist.

Um einen besonders "schonenden" Transport von Produkten sicherstellen zu können, ist erfindungsgemäß insbesondere vorgesehen, dass auf den Kettengliedern Lamellenelemente insbesondere austauschbar aufgesetzt sind, welche aus einem elastischen Material, insbesondere federelastischen Material, wie beispielsweise Gummimaterial, gebildete Lamellen aufweisen, die schräg zur Kettenlaufrichtung ausgerichtet sind.

Alternativ hierzu ist es denkbar, dass auf den Kettenglieder Lamellenelemente insbesondere austauschbar aufgesetzt sind, welche eine auf den Kettengliedern aufliegende Basis und Lamellen aufweisen, die über einen elastischen Bereich, und insbesondere federelastischen Bereich mit der Basis verbunden sind, wobei die Lamellen schräg zur Kettenlaufrichtung ausgerichtet sind.

Durch das Vorsehen von entsprechenden Lamellen aus einem insbesondere federelastischen Material bzw. durch das Vorsehen von Lamellen, die insbesondere federelastisch gelagert sind, und die schräg zur Kettenlaufrichtung ausgerichtet sind, ist in vorteilhafter Weise erreichbar, dass beim Einlaufen in die Förderkette die Produkte nicht unverzüglich mit dem gesamten Kantendruck der Kettenglieder der Förderkette oder der einzelnen Lamellen beaufschlagt und dadurch ruckartig beschleunigt werden. Aufgrund der zur Kettenlaufrichtung schrägen Ausrichtung der Lamellen legen sich erfindungsgemäß stattdessen die Lamellen in einem kontinuierlichen Verlauf mit ihrer Kante an das Produkt an, was letztendlich eine "sanftere" Geschwindigkeitsänderung (Beschleunigung) ermöglicht.

Ebenso werden bei Verzögerungen die Produkte auch "sanfter" eingebremst.

Demnach ist mit der erfindungsgemäßen Fördervorrichtung ein besonders schonender Transport von insbesondere drucksensiblen Produkten oder Verpackungen in einer Verpackungslinie realisierbar.

Gemäß bevorzugten Realisierungen der erfindungsgemäßen Fördervorrichtung ist vorgesehen, dass die Lamellen entgegen der Kettenlaufrichtung ausgerichtet sind und mit Bezug auf die Kettenlaufrichtung insbesondere um etwa 100 Grad bis 140 Grad und vorzugsweise insbesondere um etwa 110 Grad bis 130 Grad geneigt sind. Im praktischen Gebrauch haben sich diese Winkelbereiche zur (schrägen) Ausrichtung der Lamellen als besonders effektiv im Hinblick auf eine zeitlich verzögerte Beaufschlagung der Produkte mit dem Kantendruck der einzelnen Lamellen herausgestellt.

Selbstverständlich ist aber die Erfindung nicht auf diese Winkelbereiche beschränkt.

Die mit der erfindungsgemäßen Fördervorrichtung erzielbare vorteilhafte Wirkung des schonenden Transports von Produkten kann dadurch weiter optimiert werden, dass die Lamellen derart schräg auf die Kettenglieder aufgesetzt sind, dass die Lamellen schräg zur Kettengliedachse und schräg zur Kettenlaufrichtung ausgerichtet sind. Durch diese Anordnung ist beim Einlauf von Produkten in die Förderkette eine weitere zeitliche Verzögerung erzielbar, bis die Produkte mit dem gesamten Kantendruck der einzelnen Lamellen beaufschlagt werden.

Im Hinblick auf das schräge Aufsetzen der Lamellenelemente auf die Kettenglieder hat es sich als besonders wirkungsvoll gezeigt, wenn die Lamellenelemente derart schräg auf die Kettenglieder aufgesetzt sind, dass zwischen den Lamellen und der Kettengliedachse ein Winkel von insbesondere etwa 1 Grad bis etwa 5 Grad und vorzugsweise ein Winkel von insbesondere etwa 1,5 Grad bis etwa 4 Grad aufgespannt wird.

Auch diese Winkelangaben sind nicht als einschränkend anzusehen und hängen insbesondere auch von der Umlaufgeschwindigkeit der Förderkette und den mit der Förderkette zu transportierenden Produkten ab.

Erfindungsgemäß ist vorgesehen, dass die Kettenglieder vertikal ausgerichtet sind, wobei die Lamellenelemente derart schräg auf die Kettenglieder aufgesetzt sind, dass die Lamellen schräg zur Kettengliedachse ausgerichtet sind, und zwar derart, dass ein unterer Bereich einer jeden Lamelle - in Kettenlaufrichtung gesehen - seinem oberen Bereich vorauseilt.

Mit anderen Worten, aus der Sicht einer einzelnen Lamelle kommt somit der untere Bereich dieser Lamelle zeitlich gesehen vor dem oberen Bereich der entsprechenden Lamelle in Kontakt mit dem zu transportierenden Produkt. Dies hat Vorteile im Hinblick auf die Stabilität der von der Fördervorrichtung zu transportierende Produkte, da aufgrund der Schwerkraft der untere Bereich eines jeden Produkts beim Angreifen einer Transportkraft unsensibler reagiert als der entsprechende obere Bereich des Produkts.

Gemäß Realisierungen der erfindungsgemäßen Fördervorrichtung ist vorgesehen, dass - in Längsrichtung der Lamellenelemente gesehen - die Lamellen kürzer ausgebildet sind als die Kettenbreite, und zwar derart, dass die seitlichen Randbereiche der gelenkig miteinander verbundenen Kettenglieder - senkrecht zur Kettenlaufrichtung gesehen - zwei gegenüberliegende, randseitige Förderkettenbereiche bilden, welche insbesondere zur Realisierung einer Umlenkung der umlaufenden Förderkette über den Innenradius als Führung dienen.

Mit dieser Ausgestaltung ist somit die Führung und Umlenkung der Förderkette trotz des Vorsehens der Lamellenelemente nicht beeinflusst.

Vorzugsweise weisen die Kettenglieder der Förderkette jeweils einen insbesondere aus Kunststoff gebildeten Grundkörper auf, der an zwei gegenüberliegenden Randbereichen jeweils eine Verzahnung aufweist, die derart versetzt zueinander ausgeführt und ausgebildet sind, dass jeweils eine komplementäre Verzahnung eines benachbarten Kettenglieds gelenkig aufnehmbar ist.

Hierbei handelt es sich um eine besonders leicht zu realisierende aber dennoch effektive Ausgestaltung der Kettenglieder. Insbesondere sind die einzelnen Kettenglieder kostengünstig beispielsweise mit Hilfe eines Spritzgussverfahrens ausbildbar. Selbstverständlich kommen aber auch andere Ausgestaltungen für die Kettenglieder in Frage.

Im Hinblick auf die Lamellenelemente bietet es sich an, dass die Lamellenelemente jeweils als einstückig ausgeführter Körper vorzugsweise aus einem Gummimaterial ausgebildet sind. Insbesondere können die Lamellenelemente bzw. der Körper der Lamellenelemente im Zuge eines Spritzgussverfahrens gebildet werden.

Der Körper des Lamellenelements weist gemäß Realisierungen der vorliegenden Erfindung im Querschnitt eine im Wesentlichen U-förmige Konfiguration auf, und zwar mit einem Basisbereich, über den das Lamellenelement auf dem Kettenglied aufliegt, sowie mit zwei zumindest im Wesentlichen parallel verlaufenden Schenkelbereiche, welche die Lamellen des Lamellenelements ausbilden und schräg zum dem Basisbereich verlaufen.

Selbstverständlich sind hier aber auch andere Ausgestaltungen der Lamellenelemente denkbar.

Vorzugsweise wird das Lamellenelement über eine form- und/oder kraftschlüssige Verbindung mit dem Kettenglied insbesondere lös- und/oder austauschbar verbunden. Hierzu bietet es sich an, eine entsprechende Schraub- und/oder Rast- und/oder Klipsverbindung zu verwenden.

Selbstverständlich ist es aber grundsätzlich auch denkbar, das Lamellenelement stoffschlüssig, beispielsweise durch Klebung, mit dem Kettenglied zu verbinden. Dann jedoch ist die Austauschbarkeit des Lamellenelements nicht mehr gegeben bzw. entsprechen aufwändiger.

Wie bereits angedeutet, zeichnet sich die erfindungsgemäße Lösung insbesondere dadurch aus, dass die Lamellenelemente und insbesondere die Lamellen der Lamellenelemente derart ausgebildet und/oder auf den entsprechenden Kettenglieder aufgesetzt sind, dass Produkte beim Einlauf in die Förderkette in einer zeitlich verzögerten Weise mit dem Kantendruck der einzelnen Lamellen beaufschlagt werden. Auf diese Weise ist der gewünschte "sanfte" Transport der Produkte erzielbar.

Besonders bevorzugt ist vorgesehen, dass die Ausrichtung der Lamellen relativ zu der Kettenlaufrichtung und/oder relativ zu der Kettengliedachse - zumindest über einen vorab festgelegten oder festlegbaren Bereich - vorzugsweise variable einstellbar ist, um die Förderkette an die jeweilige Anwendung optimal anpassen zu können. Insbesondere ist die optimale Neigung der Lamellen relativ zu der Kettenlaufrichtung und/oder relativ zu der Kettengliedachse von der Transportgeschwindigkeit der Fördervorrichtung und ggf. der Ausgestaltung der zu transportierenden Produkte abhängig.

Die Erfindung betrifft ferner eine Transportvorrichtung zum Transportieren von Produkten, insbesondere drucksensiblen Produkten, in einer Transportrichtung. Die Transportvorrichtung weist eine erste Fördervorrichtung der zuvor genannten erfindungsgemäßen Art sowie eine zweite Fördervorrichtung der zuvor genannten erfindungsgemäßen Art auf.

Insbesondere ist bei der erfindungsgemäßen Transportvorrichtung vorgesehen, dass die Förderkette der ersten Fördervorrichtung und die Förderkette der zweiten Fördervorrichtung jeweils zumindest im Wesentlichen vertikal angeordnet sind und in einem Transportbereich der Transportvorrichtung zumindest im Wesentlichen parallel verlaufen.

Obgleich durch das Vorsehen der Lamellenelemente bereits ein besonders schonender Transport der Produkte im Transportbereich der Transportvorrichtung realisierbar ist, ist es bevorzugt, dass - in Transportrichtung der Transportvorrichtung gesehen - stromaufwärts des Transportbereichs ein Einlaufbereich ausgebildet ist, in welchem die Förderkette der ersten Fördervorrichtung und die Förderkette der zweiten Fördervorrichtung schräg zur Transportrichtung in Richtung des Transportbereichs verlaufen und so einen vorzugsweise konisch zulaufenden Einlauftrichter bilden. Durch das Vorsehen eines derartigen Einlauftrichters ist der Einlauf, d.h. die Übergabe der zu transportierenden Produkte zum Transportbereich der Transportvorrichtung, besonders produktschonend realisierbar.

Alternativ oder zusätzlich hierzu ist es denkbar, dass - in Transportrichtung der Transportvorrichtung gesehen - stromabwärts des Transportbereichs ein Auslaufbereich ausgebildet ist, in welchem die Förderkette der ersten Fördervorrichtung und die Förderkette der zweiten Fördervorrichtung jeweils schräg zur Transportrichtung nach außen verlaufen und so einen sich vorzugsweise konisch aufweitenden Auslauftrichter bilden. Durch das Vorsehen eines derartigen Auslauftrichters ist eine besonders produktschonende Übergabe der Produkte von dem Transportbereich der Transportvorrichtung zu beispielsweise einer stromabwärts angeordneten Verpackungsmaschine realisierbar.

Die zuvor genannten Vorteile, die mit der erfindungsgemäßen Fördervorrichtung erzielt werden, kommen insbesondere bei der Anwendung der Fördervorrichtung bei Speichertischen zur Geltung.

Demnach betrifft das Patentbegehren ferner einen Speichertisch für eine Verpackungsanlage, wobei der Speichertisch mindestens eine Einschleusung, mindestens eine Ausschleusung und mindestens eine mit Verpackungen bestückbare und zwischen der mindestens einen Einschleusung und der mindestens einen Ausschleusung angeordnete Speicherlinie aufweist. Zum Transport der jeweiligen Verpackungen ist der mindestens einen Speicherlinie eine Transportvorrichtung zugeordnet, wobei die Transportvorrichtung eine erste Fördervorrichtung der zuvor beschrieben, erfindungsgemäßen Art und eine zweite Fördervorrichtung der zuvor beschrieben, erfindungsgemäßen Art aufweist.

Die Förderkette der ersten Fördervorrichtung und die Förderkette der zweiten Fördervorrichtung sind jeweils zumindest im Wesentlichen vertikal angeordnet und verlaufen zumindest in einem Bereich der mindestens einen Speicherlinie zumindest im Wesentlichen parallel zueinander.

Hierbei ist insbesondere vorgesehen, dass zumindest in dem Bereich der mindestens einen Speicherlinie die Lamellen der Förderkette der ersten Fördervorrichtung und die Lamellen der Förderkette der zweiten Fördervorrichtung jeweils schräg zur Kettenlaufrichtung ausgerichtet sind und zwar derart, dass ein unterer Bereich einer jeden Lamelle - in Kettenlaufrichtung gesehen - seinem oberen Bereich vorauseilt.

Mit dieser Anordnung ist ein von den Lamellen bewirkbarer selbstverstärkter Klemmeffekt erzielbar. Die spezielle Schrägstellung der Lamellen führt dazu, dass eine von den Lamellen der beiden Förderketten auf die Produkte ausgeübte Klemmkraft in Abhängigkeit von einer Krafteinwirkung, die in Kettenlaufrichtung und relativ zwischen den Lamellen und den Produkten wirkt, verstärkt wird. Auf diese Weise wird mit den Lamellen einem ansteigenden Produktrückstau entgegengewirkt, wobei andererseits der ansteigende Rückstau die Aufrichtung der Lamellen verstärkt.

Der erfindungsgemäße Speichertisch ist insbesondere ein Speichertisch, in welchem Verpackungen ohne Druck, d.h. mit einem vorab festgelegten oder festlegbaren (geringen) Abstand zwischen einander, zwischengespeichert werden oder zwischenspeicherbar sind.

Schließlich betrifft die Erfindung noch eine Verpackungsmaschine mit mindestens einer und vorzugsweise mindestens zwei Verpackungsanlagen und einer Transportvorrichtung der zuvor genannten erfindungsgemäßen Art, wobei die Transportvorrichtung zum Zu- und/oder Abführen von Produkten zu und/oder von der mindestens einen Verpackungsanlage dient.

Nachfolgend wird unter Bezugnahme auf die beiliegenden Zeichnungen die Erfindung anhand von exemplarischen Ausführungsformen näher beschrieben.

Es zeigen:
- FIG. 1: schematisch und in einer isometrischen Ansicht eine exemplarische Ausführungsform der erfindungsgemäßen Transportvorrichtung mit zwei parallel angeordneten Förderketten zum Transport von Trinkverpackungen;
- FIG. 2: schematisch und in einer isometrischen Ansicht einen Bereich einer Förderkette einer exemplarischen Ausführungsform der erfindungsgemäßen Fördervorrichtung;
- FIG. 3: schematisch und in einer Seitenansicht den Bereich der Förderkette gemäß FIG. 2;
- FIG. 4: schematisch und in einer Draufsicht den Bereich der Förderkette gemäß FIG. 2;
- FIG. 5: schematisch und in einer Frontansicht den Bereich der Förderkette gemäß FIG. 2;
- FIG. 6: schematisch und in einer isometrischen Ansicht eine exemplarische Ausführungsform eines Kettenglieds mit Lamellenelement für eine Fördervorrichtung gemäß der vorliegenden Erfindung;
- FIG. 7A: schematisch und in einer isometrischen Ansicht das Wechselwirken eines Kettenglieds mit Lamellenelement einer Förderkette mit einem Produkt;
- FIG. 7B: schematisch und in einer Frontansicht das Produkt mit dem Kettenglied und Lamellenelement gemäß FIG. 7A; und
- FIG. 8: schematisch und in einer Draufsicht eine weitere exemplarische Ausführungsform der erfindungsgemäßen Transportvorrichtung.

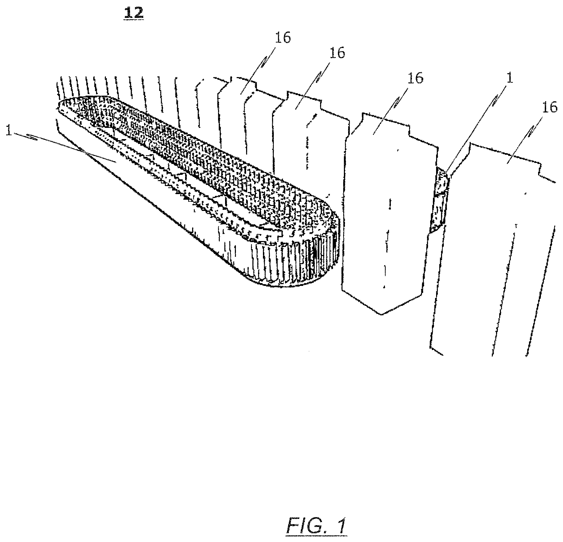

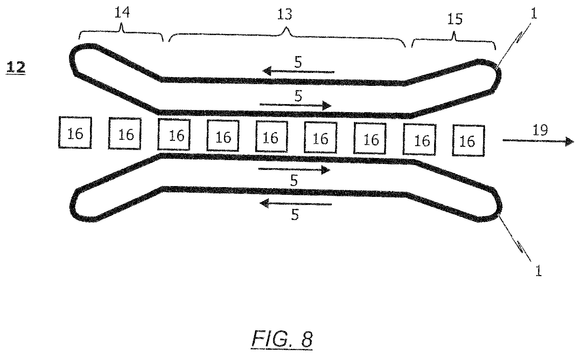

In FIG. 1 ist schematisch und in einer isometrischen Ansicht eine exemplarische Ausführungsform der erfindungsgemäßen Transportvorrichtung 12 gezeigt. Die Transportvorrichtung 12 dient zum Transportieren von Produkten 16 (hier: Trinkverpackungen) in einer Transportrichtung. Zu diesem Zweck kommen zwei zumindest bereichsweise parallel angeordnete Förderketten 1 zum Einsatz, zwischen denen ein Transportbereich 13 (siehe FIG. 8) der Transportvorrichtung 12 ausgebildet wird.

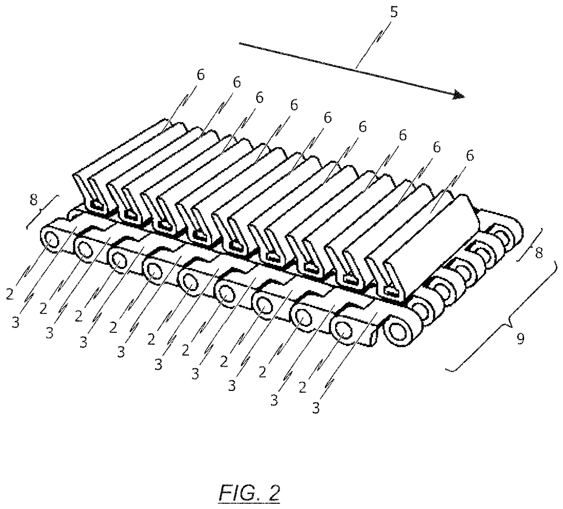

Die bei der Transportvorrichtung 12 gemäß FIG. 1 zum Einsatz kommenden Förderketten 1 werden nachfolgend unter Bezugnahme auf die Darstellungen in FIG. 2 bis FIG. 7 näher beschrieben. Es handelt sich hierbei insbesondere um Förderketten 1, die einen besonders schonenden Produkttransport gewährleisten.

Wie es beispielsweise der isometrischen Ansicht eines Teilbereichs der Förderkette 1 gemäß FIG. 2 entnommen werden kann, weist die Förderkette 1 eine Vielzahl von über quer verlaufende Kettenbolzen 2 um jeweils eine Kettengliedachse 4 gelenkig miteinander verbundene Kettenglieder 3 auf. Andererseits sind auf den Kettengliedern 3 Lamellenelemente 6 insbesondere austauschbar aufgesetzt.

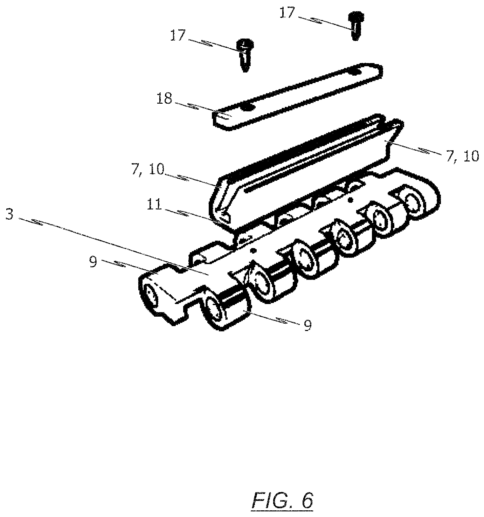

Wie es der Explosionsdarstellung gemäß FIG. 6 entnommen werden kann, ist bei der in den Zeichnungen gezeigten Ausführungsform vorgesehen, dass je Kettenglied 3 genau ein Lamellenelement 6 zum Einsatz kommt. Das Lamellenelement 6 ist vorzugsweise austauschbar auf dem Kettenglied 3 aufgesetzt, beispielsweise mit Hilfe einer Schraubverbindung 18 und einer Druckplatte 18. Auf dieses Weise ist sichergestellt, dass eine relative Ausrichtung des Lamellenelements zum Kettenglied 3 (zumindest über einen gewissen Bereich) variabel anpassbar ist.

Im Einzelnen weist jedes Kettenglied 3 einen insbesondere aus Kunststoff gebildeten Grundkörper auf, der an zwei gegenüberliegenden Randbereichen jeweils eine Verzahnung 9 aufweist, die versetzt zueinander ausgeführt und ausgebildet sind, jeweils eine komplementäre Verzahnung 9 eines benachbarten Kettenglieds 3 gelenkig aufzunehmen.

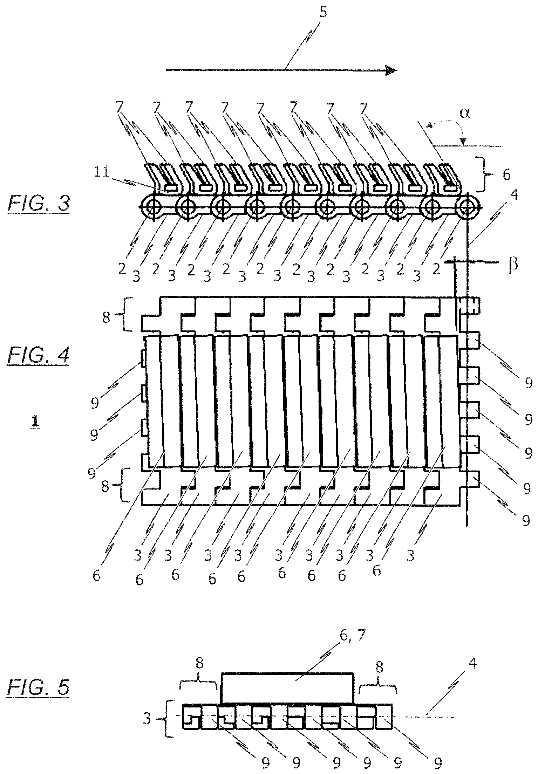

Das Lamellenelement 6 ist bei den in den Zeichnungen gezeigten Ausführungsformen als einstückig ausgeführter Körper vorzugsweise aus Gummimaterial ausgebildet, der im Querschnitt (vgl. beispielsweise FIG. 3) im Wesentlichen eine U-Form aufweist mit einem Basisbereich 11, über den das Lamellenelement 6 auf dem Kettenglied 3 aufliegt, sowie mit zwei zumindest im Wesentlichen parallel verlaufenden Schenkelbereichen 10, welche die Lamellen 7 des Lamellenelements ausbilden und insbesondere schräg zu dem Basisbereich 11 verlaufen.

Im Einzelnen sind die Lamellenelemente 6 derart auf den einzelnen Kettengliedern 3 aufgesetzt, dass die jeweiligen Lamellen 7 der Lamellenelemente 6 schräg zur Kettenlaufrichtung 5 ausgerichtet sind, wie es beispielsweise der Seitenansicht in FIG. 3 entnommen werden kann.

Insbesondere sind die Lamellen 7 entgegen der Kettenlaufrichtung 5 ausgerichtet und mit Bezug auf die Kettenlaufrichtung 5 vorzugsweise um einen Winkel α von 100 Grad bis 140 Grad und insbesondere um einen Winkel α von vorzugsweise 110 Grad bis 130 Grad geneigt. Der entsprechende Neigungswinkel (Winkel α) ist in FIG. 3 angedeutet.

Darüber hinaus ist bei der in den Zeichnungen gezeigten Ausführungsform vorgesehen, dass die Lamellenelemente 6 derart schräg auf die Kettenglieder 3 aufgesetzt sind, dass die Lamellen 7 schräg zur Kettengliedachse 4 und schräg zur Kettenlaufrichtung 5 ausgerichtet sind, d.h. nicht rechtwinklig zur Kettenlaufrichtung 5. Dies ergibt sich anhand der Ansicht (Draufsicht) in FIG. 4.

Im Einzelnen sind vorzugsweise die Lamellenelemente 6 derart schräg auf die Kettenglieder 3 aufgesetzt, dass zwischen den Lamellen 7 und der Kettengliedachse 4 ein Winkel β von insbesondere etwa 1 Grad bis etwa 5 Grad und vorzugsweise von insbesondere etwa 1,5 Grad bis etwa 4 Grad aufgespannt wird. Der entsprechende Winkel β ist in FIG. 4 angedeutet.

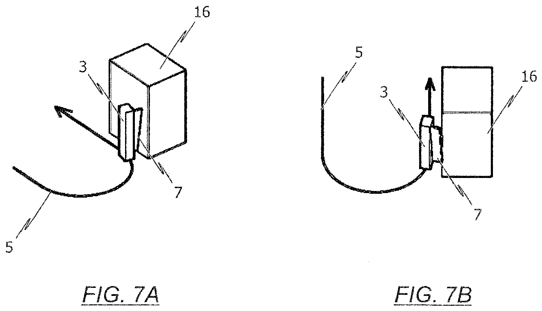

Wie es den Prinzipdarstellungen in FIG. 7A und FIG. 7B entnommen werden kann, sind die Kettenglieder 3 im Gebrauch der Fördervorrichtung insbesondere vertikal ausgerichtet. Dabei sind die Lamellenelemente 6 derart schräg auf die Kettenglieder 3 aufgesetzt, dass die entsprechenden Lamellen 7 der Lamellenelemente 6 schräg zur Kettengliedachse 4 ausgerichtet sind, und zwar derart, dass ein unterer Bereich einer jeden Lamelle 7 - in Kettenlaufrichtung 5 gesehen - seinem oberen Bereich vorauseilt. Dies ergibt sich insbesondere anhand der Frontansicht in FIG. 7B.

Der Draufsicht in FIG. 4, der isometrischen Ansicht gemäß FIG. 2 und der isometrischen Ansicht in FIG. 1 ist insbesondere entnehmbar, dass - in Längsrichtung der Lamellenelemente 6 gesehen - die Lamellen 7 kürzer ausgebildet sind als die Kettenbreite, und zwar derart, dass die seitlichen Randbereiche 8 der gelenkig miteinander verbundenen Kettenglieder 3 - senkrecht zur Kettenlaufrichtung 5 gesehen - zwei gegenüberliegende, randseitige Förderkettenbereiche bilden, welche insbesondere zur Realisierung einer Umlenkung der umlaufenden Förderkette 1 über den Innenradius als Führung dienen.

Die Lamellenelemente 6 und insbesondere die Lamellen 7 der Lamellenelemente 6 sind derart ausgebildet und/oder auf den Kettengliedern 3 aufgesetzt, dass Produkte 16 beim Einlauf in die Förderkette 1 in einer zeitlich verzögerten Weise mit dem Kantendruck der einzelnen Lamellen 7 beaufschlagt werden. Indem bewusst sichergestellt ist, dass die Produkte 16 beim Einlaufen in die Förderkette 1 nicht unverzüglich mit dem gesamten Kantendruck der einzelnen Lamellen 7 beaufschlagt werden, ist wirkungsvoll eine ruckartige Beschleunigung der Produkte 16 verhindert. Vielmehr legen sich die Lamellen 7 in einem kontinuierlichen Verlauf mit ihren Kanten an das Produkt 16 an, was eine deutlich sanftere Geschwindigkeitsänderung (Beschleunigung) ermöglicht. Ebenso werden bei Verzögerungen die Produkte 16 auch sanfter eingebremst.

In FIG. 8 ist schematisch und in einer Draufsicht eine weitere Ausführungsform der erfindungsgemäßen Transportvorrichtung 12 gezeigt.

Diese Ausführungsform weist eine erste Fördervorrichtung der erfindungsgemäßen Art sowie eine zweite Fördervorrichtung der erfindungsgemäßen Art auf, wobei die Förderkette 1 der ersten Fördervorrichtung und die Förderkette 1 der zweiten Fördervorrichtung jeweils zumindest im Wesentlichen vertikal angeordnet sind und in einem Transportbereich 13 der Transportvorrichtung 12 zumindest im Wesentlichen parallel verlaufen.

Im Unterschied zu der Transportvorrichtung 12 gemäß FIG. 1 zeichnet sich die Transportvorrichtung 12 gemäß FIG. 8 dadurch aus, dass - in Transportrichtung 19 der Transportvorrichtung 12 gesehen - stromabwärts des Transportbereichs 13 eine Einlaufbereich 14 ausgebildet ist, in welchem die Förderkette 1 der ersten Fördervorrichtung und die Förderkette 1 der zweiten Fördervorrichtung schräg zur Transportrichtung 19 in Richtung des Transportbereichs 13 verlaufen und einen vorzugsweise konisch zulaufenden Einlauftrichter bilden.

Darüber hinaus ist bei der Transportvorrichtung 12 gemäß FIG. 8 vorgesehen, dass - in Transportrichtung 19 der Transportvorrichtung 12 gesehen - stromabwärts des Transportbereichs 13 ein Auslaufbereich 15 ausgebildet ist, in welchem die Förderkette 1 der ersten Fördervorrichtung und die Förderkette 1 der zweiten Fördervorrichtung schräg zur Transportrichtung 19 nach außen verlaufen und so einen sich vorzugsweise konisch erweiternden Auslauftrichter bilden. Auf diese Weise ist beim Einlaufbereich 14 eine Führung der Produkte 16 mit einem gewissen Einlaufwinkel und beim Auslaufbereich 15 eine Führung der Produkte 16 mit einem entsprechenden Auslaufwinkel realisierbar.

Durch das Vorsehen eines derartigen Einlauf- und Auslaufbereichs (14, 15) werden im Bereich, wo die zu transportierenden Produkte 16 eingefangen oder übernommen werden, die Produkte 16 noch sanfter von der Transportvorrichtung 12 aufgenommen.

Die Erfindung ist nicht auf die in den Zeichnungen gezeigten Ausführungsformen begrenzt, sondern ergibt sich aus einer Zusammenschau sämtlicher hierin offenbarter Merkmale.

### Bezugszeichenliste

- 1: Förderkette
- 2: Kettenbolzen
- 3: Kettenglied
- 4: Kettengliedachse
- 5: Kettenlaufrichtung
- 6: Lamellenelement
- 7: Lamelle
- 8: randseitiger Förderkettenbereich
- 9: Verzahnung
- 10: Schenkelbereich des Lamellenelement-Körpers
- 11: Basisbereich des Lamellenelement-Körpers
- 12: Transportvorrichtung
- 13: Transportbereich
- 14: Einlaufbereich
- 15: Auslaufbereich
- 16: Produkt
- 17: Schraubverbindung
- 18: Platte
- 19: Transportrichtung

## Patentansprüche

1. Fördervorrichtung für eine Verpackungsmaschine mit mindestens einer in einer Kettenlaufrichtung (5) umlaufenden Förderkette (1), die eine Vielzahl von über quer verlaufende Kettenbolzen (2) um jeweils eine Kettengliedachse (4) gelenkig miteinander verbundene Kettenglieder (3) aufweist, wobei:
auf den Kettengliedern (3) Lamellenelemente (6) insbesondere austauschbar aufgesetzt sind, welche aus einem elastischen Material, insbesondere federelastischen Material gebildete Lamellen (7) aufweisen, die schräg zur Kettenlaufrichtung (5) ausgerichtet sind; oder wobei
auf den Kettengliedern (3) Lamellenelemente (6) insbesondere austauschbar aufgesetzt sind, welche eine auf den Kettengliedern (3) aufliegende Basis (11) und Lamellen (7) aufweisen, die über einen elastischen Bereich und insbesondere federelastischen Bereich mit der Basis (11) verbunden sind, wobei die Lamellen (7) schräg zur Kettenlaufrichtung (5) ausgerichtet sind,
**dadurch gekennzeichnet, dass**
die Kettenglieder (3) vertikal ausgerichtet sind, und wobei die Lamellenelemente (6) derart schräg auf die Kettenglieder (3) aufgesetzt sind, dass die Lamellen (7) schräg zur Kettengliedachse (4) ausgerichtet sind, und zwar derart, dass ein unterer Bereich einer jeden Lamelle (7) - in Kettenlaufrichtung (5) gesehen - seinem oberen Bereich vorauseilt.

2. Fördervorrichtung nach Anspruch 1,
wobei die Lamellen (7) entgegen der Kettenlaufrichtung (5) ausgerichtet sind und mit Bezug auf die Kettenlaufrichtung (5) insbesondere um einen Winkel α von 100 Grad bis 140 Grad und vorzugsweise insbesondere um einen Winkel α von 110 Grad bis 130 Grad geneigt sind.

3. Fördervorrichtung nach Anspruch 1 oder 2,
wobei die Lamellenelemente (6) derart schräg auf die Kettenglieder (3) aufgesetzt sind, dass die Lamellen (7) schräg zur Kettengliedachse (4) und schräg zur Kettenlaufrichtung (5) ausgerichtet sind,
wobei die Lamellenelemente (6) derart schräg auf die Kettenglieder (3) aufgesetzt sind, dass zwischen den Lamellen (7) und der Kettengliedachse (4) vorzugsweise ein Winkel β von insbesondere etwa 1 Grad bis etwa 5 Grad und noch bevorzugter ein Winkel β von insbesondere etwa 1,5 Grad bis etwa 4 Grad aufgespannt wird.

4. Fördervorrichtung nach einem der Ansprüche 1 bis 3,
wobei - in Längsrichtung der Lamellenelemente (6) gesehen - die Lamellen (7) kürzer als die Kettenbreite ausgebildet sind derart, dass die seitlichen Randbereiche der gelenkig miteinander verbundenen Kettenglieder (3) - senkrecht zur Kettenlaufrichtung (5) gesehen - zwei gegenüberliegende, randseitige Förderkettenbereiche (8) bilden, welche insbesondere zur Realisierung einer Umlenkung der umlaufenden Förderkette (1) über den Innenradius als Führung dienen.

5. Fördervorrichtung nach einem der Ansprüche 1 bis 4,
wobei die Kettenglieder (3) jeweils einen insbesondere aus Kunststoff gebildeten Grundkörper ausweisen, der an zwei gegenüberliegenden Randbereichen jeweils eine Verzahnung (9) aufweist, die versetzt zueinander ausgeführt und ausgebildet sind, jeweils eine komplementäre Verzahnung (9) eines benachbarten Kettenglieds (3) gelenkig aufzunehmen.

6. Fördervorrichtung nach einem der Ansprüche 1 bis 5,
wobei das Lamellenelement (6) als vorzugsweise einstückig ausgeführter Körper vorzugsweise aus Gummimaterial ausgebildet ist, der im Querschnitt im Wesentlichen eine U-Form aufweist mit einem Basisbereich (11), über den das Lamellenelement (6) auf dem entsprechenden Kettenglied (3) aufliegt, und mit zwei zumindest im Wesentlichen parallel verlaufenden Schenkelbereichen (10), welche die Lamellen (7) ausbilden und schräg zu dem Basisbereich (11) verlaufen.

7. Fördervorrichtung nach einem der Ansprüche 1 bis 6,
wobei das Lamellenelement (6) über eine form- und/oder kraftschlüssige Verbindung mit dem Kettenglied (3) vorzugsweise lös- und/oder austauschbar verbunden ist, insbesondere mit Hilfe einer Schraub-, Rast- und/oder Klipsverbindung (17).

8. Fördervorrichtung nach einem der Ansprüche 1 bis 7,
wobei die Lamellenelemente (6) und insbesondere die Lamellen (7) der Lamellenelemente (6) derart ausgebildet und/oder auf den Kettengliedern (3) aufgesetzt sind, dass Produkte (16) beim Einlauf in die Förderkette (1) in einer zeitlich verzögerten Weise mit dem Kantendruck der einzelnen Lamellen (7) beaufschlagt werden.

9. Fördervorrichtung nach einem der Ansprüche 1 bis 8,
wobei die Ausrichtung der Lamellen (7) relativ zu der Kettenlaufrichtung (5) und/oder relativ zu der Kettengliedachse (4) zumindest über einen vorab festgelegten oder festlegbaren Bereich vorzugsweise variabel einstellbar ist.

10. Speichertisch für eine Verpackungsanlage, wobei der Speichertisch Folgendes aufweist:
- mindestens eine Einschleusung;
- mindestens eine Ausschleusung; und
- mindestens eine mit Verpackungen (16) bestückbare und zwischen der mindestens einen Einschleusung und der mindestens einen Ausschleusung angeordnete Speicherlinie, wobei zum Transport der jeweiligen Verpackungen (16) der mindestens einen Speicherlinie eine Transportvorrichtung zugeordnet ist,
wobei die Transportvorrichtung Folgendes aufweist:
- eine erste Fördervorrichtung nach einem der Ansprüche 1 bis 9; und
- eine zweite Fördervorrichtung nach einem der Ansprüche 1 bis 9,
wobei die Förderkette (1) der ersten Fördervorrichtung und die Förderkette (1) der zweiten Fördervorrichtung jeweils zumindest im Wesentlichen vertikal angeordnet sind und zumindest in einem Bereich der mindestens einen Speicherlinie zumindest im Wesentlichen parallel zueinander verlaufen, wobei zumindest in dem Bereich der mindestens einen Speicherlinie die Lamellen (7) der Förderkette (1) der ersten Fördervorrichtung und die Lamellen (7) der Förderkette (1) der zweiten Fördervorrichtung jeweils schräg zur Kettenlaufrichtung (5) ausgerichtet sind und zwar derart, dass ein unterer Bereich einer jeden Lamelle (7) - in Kettenlaufrichtung (5) gesehen - seinem oberen Bereich vorauseilt, insbesondere derart, dass vorzugsweise eine von den Lamellen (7) der beiden Förderketten (1) auf die Produkte (16) ausgeübte Klemmkraft in Abhängigkeit von einer Krafteinwirkung, die in Kettenlaufrichtung (5) und relativ zwischen den Lamellen (7) und den Produkten (16) wirkt, verstärkt wird.

11. Transportvorrichtung (12) zum Transportieren von Produkten (16), insbesondere drucksensiblen Produkten (16), wie Weichverpackungen, in einer Transportrichtung (19), wobei die Transportvorrichtung (12) Folgendes aufweist:
- eine erste Fördervorrichtung nach einem der Ansprüche 1 bis 9; und
- eine zweite Fördervorrichtung nach einem der Ansprüche 1 bis 9, wobei die Förderkette (1) der ersten Fördervorrichtung und die Förderkette (1) der zweiten Fördervorrichtung jeweils zumindest im Wesentlichen vertikal angeordnet sind und in einem Transportbereich (13) der Transportvorrichtung (12) zumindest im Wesentlichen parallel zueinander verlaufen.

12. Transportvorrichtung (12) nach Anspruch 11,
wobei - in Transportrichtung (19) der Transportvorrichtung (12) gesehen - stromaufwärts des Transportbereichs (13) ein Einlaufbereich (14) ausgebildet ist, in welchem die Förderkette (1) der ersten Fördervorrichtung und die Förderkette (1) der zweiten Fördervorrichtung schräg zur Transportrichtung (19) in Richtung des Transportbereichs (13) verlaufen und einen vorzugsweise konisch zulaufenden Einlauftrichter bilden; und/oder
wobei - in Transportrichtung (19) der Transportvorrichtung (12) gesehen - stromabwärts des Transportbereichs (13) ein Auslaufbereich (15) ausgebildet ist, in welchem die Förderkette (1) der ersten Fördervorrichtung und die Förderkette (1) der zweiten Fördervorrichtung schräg zur Transportrichtung (19) nach außen verlaufen und einen sich vorzugsweise konisch erweiternden Auslauftrichter bilden.

13. Verpackungsmaschine mit mindestens einer und vorzugsweise mindestens zwei Verpackungsanlagen und einem Speichertisch nach Anspruch 10 zum bedarfsweisen Zwischenspeichern von Produkten und/oder mit einer Transportvorrichtung (12) nach Anspruch 11 oder 12 zum Zu- und/oder Abführen von Produkten (16) zu und/oder von der mindestens einen Verpackungsanlage.

## Claims

1. A conveying apparatus for a packaging machine having at least one conveyor chain (1) which circulates in a chain running direction (5) and comprises a large number of chain links (3) that are connected to one another in an articulated manner around a respective chain link axis (4) via transversely extending chain pins (2), wherein:
lamellar elements (6) comprising lamellae (7) made of an elastic material, in particular a spring-elastic material, which are oriented obliquely with respect to the chain running direction (5) are placed on the chain links (3), in particular interchangeably; or wherein
lamellar elements (6) comprising a base (11) that rests on the chain links (3) and lamellae (7) that are connected to the base (11) via an elastic region and in particular a spring-elastic region are placed on the chain links (3), in particular interchangeably, wherein the lamellae (7) are oriented obliquely with respect to the chain running direction (5), **characterized in that**
the chain links (3) are oriented vertically, and wherein the lamellar elements (6) are placed obliquely on the chain links (3) such that the lamellae (7) are oriented obliquely with respect to the chain link axis (4), specifically
such that, when viewed in chain running direction (5), a lower region of each lamella (7) precedes its upper region.

2. The conveying apparatus according to Claim 1,
wherein the lamellae (7) are oriented counter to the chain running direction (5) and are inclined with respect to the chain running direction (5), in particular by an angle α of 100 degrees to 140 degrees and preferably in particular by an angle α of 110 degrees to 130 degrees.

3. The conveying apparatus according to Claim 1 or 2,
wherein the lamellar elements (6) are placed obliquely on the chain links (3) such that the lamellae (7) are oriented obliquely with respect to the chain link axis (4) and obliquely with respect to the chain running direction (5),
wherein the lamellar elements (6) are placed obliquely on the chain links (3) such that preferably an angle β of in particular approximately 1 degree to approximately 5 degrees and even more preferably an angle β of in particular approximately 1.5 degrees to approximately 4 degrees is defined between the lamellae (7) and the chain link axis (4).

4. The conveying apparatus according to any one of Claims 1 to 3,
wherein, when viewed in longitudinal direction of the lamellar elements (6), the lamellae (7) are configured to be shorter than the chain width such that, when viewed perpendicular to the chain running direction (5), the lateral edge regions of the chain links (3) connected to one another in an articulated manner form two opposite, edge-side conveyor chain regions (8) that serve as a guide, in particular for implementing a deflection of the circulating conveyor chain (1) over the inner radius.

5. The conveying apparatus according to any one of Claims 1 to 4,
wherein the chain links (3) each comprise a base body, in particular made of plastic, having a respective toothing (9) on two opposite edge regions, wherein said toothings are offset relative to one another and configured to respectively accommodate a complementary toothing (9) of an adjacent chain link (3) in an articulated manner.

6. The conveying apparatus according to any one of Claims 1 to 5,
wherein the lamellar element (6) is configured as a preferably one-piece body, which is preferably made of a rubber material and is substantially U-shaped in cross-section with a base region (11), via which the lamellar element (6) rests on the corresponding chain link (3), and with two at least substantially parallel leg regions (10) which form the lamellae (7) and extend obliquely with respect to the base region (11).

7. The conveying apparatus according to any one of Claims 1 to 6,
wherein the lamellar element (6) is connected to the chain link (3), preferably in a detachable and/or interchangeable manner, via a form- and/or force-locking connection, in particular with the aid of a screw, latching, and/or clip connection (17).

8. The conveying apparatus according to any one of Claims 1 to 7,
wherein the lamellar elements (6), and in particular the lamellae (7) of the lamellar elements (6), are configured and/or placed on the chain links (3) such that products (16) are subjected to the edge pressure of the individual lamellae (7) in a time-delayed manner when they enter the conveyor chain (1).

9. The conveying apparatus according to any one of Claims 1 to 8,
wherein the orientation of the lamellae (7) relative to the chain running direction (5) and/or relative to the chain link axis (4) is preferably variably adjustable at least over a previously defined or definable range.

10. A buffer table for a packaging installation, wherein the buffer table comprises the following:
- at least one infeed;
- at least one outfeed; and
- at least one buffer line which can be loaded with packs (16) and is disposed between the at least one infeed section and the at least one outfeed section, wherein a transport apparatus is assigned to the at least one buffer line for transporting the respective packs (16),
wherein the transport apparatus comprises the following:
- a first conveying apparatus according to any one of Claims 1 to 9; and
- a second conveying apparatus according to any one of Claims 1 to 9,
wherein the conveyor chain (1) of the first conveying apparatus and the conveyor chain (1) of the second conveying apparatus are each disposed at least substantially vertically and extend at least substantially parallel to one another at least in one region of the at least one buffer line wherein, at least in the region of the at least one buffer line, the lamellae (7) of the conveyor chain (1) of the first conveying apparatus and the lamellae (7) of the conveyor chain (1) of the second conveying apparatus are each oriented obliquely with respect to the chain running direction (5), specifically such that, when viewed in chain running direction (5), a lower region of each lamella (7) precedes its upper region, in particular such that a clamping force exerted onto the products (16) by the lamellae (7) of the two conveyor chains (1) is preferably increased as a function of a force effect which acts in chain running direction (5) and in a relative manner between the lamellae (7) and the products (16).

11. A transport apparatus (12) for transporting products (16), in particular pressure-sensitive products (16), such as soft packaging, in a transport direction (19), wherein the transport apparatus (12) comprises the following:
- a first conveying apparatus according to any one of Claims 1 to 9; and
- a second conveying apparatus according to any one of Claims 1 to 9,
wherein the conveyor chain (1) of the first conveying apparatus and the conveyor chain (1) of the second conveying apparatus are each disposed at least substantially vertically and extend at least substantially parallel to one another in a transport region (13) of the transport apparatus (12).

12. The transport apparatus (12) according to Claim 11, wherein, when viewed in transport direction (19) of the transport apparatus (12), an infeed area (14) is configured upstream of the transport region (13), in which infeed area the conveyor chain (1) of the first conveying apparatus and the conveyor chain (1) of the second conveying apparatus extend obliquely with respect to the transport direction (19) in the direction of the transport region (13) and form a preferably conically tapering infeed funnel; and/or
wherein, when viewed in transport direction (19) of the transport apparatus (12), an outfeed area (15) is configured downstream of the transport region (13), in which outfeed area the conveyor chain (1) of the first conveying apparatus and the conveyor chain (1) of the second conveying apparatus extend outward obliquely with respect to the transport direction (19) and form a preferably conically widening outfeed funnel.

13. A packaging machine comprising at least one and preferably at least two packaging installations and a buffer table according to Claim 10 for temporarily storing products as needed and/or comprising a transport apparatus (12) according to Claim 11 or 12 for delivering and/or removing products (16) to and/or from the at least one packaging installation.

## Revendications

1. Appareil de convoyage pour une machine d'emballage ayant au moins une chaîne de convoyeur (1) qui circule dans une direction de défilement de chaîne (5) et comprend un grand nombre de maillons de chaîne (3) qui sont reliés les uns aux autres de manière articulée autour d'un axe de maillon de chaîne (4) respectif par l'intermédiaire de broches de chaîne (2) s'étendant transversalement, dans lequel :
des éléments lamellaires (6) comprenant des lamelles (7) composées d'un matériau élastique, en particulier en matériau élastique, qui sont orientées obliquement par rapport à la direction de défilement de chaîne (5), sont placés sur les maillons de chaîne (3), en particulier de manière interchangeable ; ou dans lequel
des éléments lamellaires (6) comprenant une base (11) qui repose sur les maillons de chaîne (3) et des lamelles (7) qui sont reliées à la base (11) par l'intermédiaire d'une région élastique et en particulier d'une région élastique sont placées sur les maillons de chaîne (3), en particulier de manière interchangeable, dans lequel les lamelles (7) sont orientées obliquement par rapport à la direction de défilement de chaîne (5), **caractérisé en ce que** les maillons de chaîne (3) sont orientés verticalement, et
dans lequel les éléments lamellaires (6) sont placés obliquement sur les maillons de chaîne (3) de telle sorte que les lamelles (7) sont orientées obliquement par rapport à l'axe de maillon de chaîne (4), spécifiquement de telle sorte que, lorsqu'elle est vue dans la direction de défilement de chaîne (5), une région inférieure de chaque lamelle (7) précède sa région supérieure.

2. Appareil de convoyage selon la revendication 1,
dans lequel les lamelles (7) sont orientées à l'opposé de la direction de défilement de chaîne (5) et sont inclinées par rapport à la direction de défilement de chaîne (5), en particulier d'un angle α de 100 degrés à 140 degrés et de préférence en particulier d'un angle α de 110 degrés à 130 degrés.

3. Appareil de convoyage selon la revendication 1 ou 2, dans lequel les éléments lamellaires (6) sont placés obliquement sur les maillons de chaîne (3) de telle sorte que les lamelles (7) sont orientées obliquement par rapport à l'axe de maillon de chaîne (4) et obliquement par rapport à la direction de défilement de chaîne (5),
dans lequel les éléments lamellaires (6) sont placés obliquement sur les maillons de chaîne (3) de telle sorte que, de préférence, un angle β d'approximativement 1 degré à approximativement 5 degrés et de manière davantage préférée un angle β d'en particulier approximativement 1,5 degré à approximativement 4 degrés est défini entre les lamelles (7) et l'axe de maillon de chaîne (4).

4. Appareil de convoyage selon l'une quelconque des revendications 1 à 3,
dans lequel, lorsqu'elles sont vues dans la direction longitudinale des éléments lamellaires (6), les lamelles (7) sont configurées pour être plus courtes que la largeur de chaîne de sorte que, lorsqu'elles sont vues perpendiculairement à la direction de défilement de chaîne (5), les régions d'arête latérales des maillons de chaîne (3) reliés les unes aux autres de manière articulée forment deux régions de chaîne de convoyeur (8) opposées, côté arête, qui servent de guide, en particulier pour mettre en œuvre une déviation de la chaîne de convoyeur (1) en circulation sur le rayon intérieur.

5. Appareil de convoyage selon l'une quelconque des revendications 1 à 4,
dans lequel les maillons de chaîne (3) comprennent chacun un corps de base, en particulier composé de plastique, ayant une denture (9) respective sur deux régions d'arête opposées, dans lequel lesdites dentures sont décalées les unes par rapport aux autres et configurées pour accueillir respectivement une denture (9) complémentaire d'un maillon de chaîne (3) adjacent de manière articulée.

6. Appareil de convoyage selon l'une quelconque des revendications 1 à 5,
dans lequel l'élément lamellaire (6) est configuré comme un corps de préférence monobloc, qui est de préférence composé de caoutchouc et a une section transversale sensiblement en forme de U, avec une région de base (11) par l'intermédiaire de laquelle l'élément lamellaire (6) repose sur le maillon de chaîne (3) correspondant, et avec deux régions de branche (10) au moins sensiblement parallèles qui forment les lamelles (7) et s'étendent obliquement par rapport à la région de base (11).

7. Appareil de convoyage selon l'une quelconque des revendications 1 à 6,
dans lequel l'élément lamellaire (6) est relié au maillon de chaîne (3), de préférence de manière amovible et/ou interchangeable, par l'intermédiaire d'un raccord à complémentarité de forme et/ou à verrouillage par force, en particulier à l'aide d'un raccord (17) à vis, à encliquetage et/ou à clips.

8. Appareil de convoyage selon l'une quelconque des revendications 1 à 7,
dans lequel les éléments lamellaires (6), et en particulier les lamelles (7) des éléments lamellaires (6), sont configurés et/ou placés sur les maillons de chaîne (3) de telle sorte que les produits (16) sont soumis à la pression sur les arêtes des lamelles (7) individuelles de manière décalée dans le temps lors de leur entrée sur la chaîne de convoyeur (1).

9. Appareil de convoyage selon l'une quelconque des revendications 1 à 8,
dans lequel l'orientation des lamelles (7) par rapport à la direction de défilement de chaîne (5) et/ou par rapport à l'axe de maillon de chaîne (4) est de préférence réglable de manière variable au moins sur une plage définie précédemment ou définissable.

10. Table tampon pour une installation d'emballage, dans laquelle la table tampon comprend ce qui suit :
- au moins une entrée d'alimentation ;
- au moins une sortie d'évacuation ; et
- au moins une ligne tampon qui peut être chargée avec des paquets (16) et est disposée entre l'au moins une section d'entrée d'alimentation et l'au moins une section de sortie d'évacuation, dans laquelle un appareil de transport est affecté à l'au moins une ligne tampon pour transporter les paquets (16) respectifs,
dans laquelle l'appareil de transport comprend ce qui suit :
- un premier appareil de convoyage selon l'une quelconque des revendications 1 à 9 ; et
- un deuxième appareil de convoyage selon l'une quelconque des revendications 1 à 9,
dans laquelle la chaîne de convoyeur (1) du premier appareil de convoyage et la chaîne de convoyeur (1) du deuxième appareil de convoyage sont chacune disposées au moins sensiblement verticalement et s'étendent au moins sensiblement l'une parallèle à l'autre au moins dans une région de l'au moins une ligne tampon, dans laquelle, au moins dans la région de l'au moins une ligne tampon, les lamelles (7) de la chaîne de convoyeur (1) du premier appareil de convoyage et les lamelles (7) de la chaîne de convoyeur (1) du deuxième appareil de convoyage sont chacune orientées obliquement par rapport à la direction de défilement de chaîne (5), spécifiquement de sorte que, lorsqu'elle est vue dans la direction de défilement de chaîne (5), une région inférieure de chaque lamelle (7) précède sa région supérieure, en particulier de telle sorte qu'une force de serrage exercée sur les produits (16) par les lamelles (7) des deux chaînes de convoyeur (1) est de préférence augmentée en fonction d'un effet de force agissant dans la direction de défilement de chaîne (5) et de manière relative entre les lamelles (7) et les produits (16).

11. Appareil de transport (12) pour transporter des produits (16), en particulier des produits sensibles à la pression (16), tels que des emballages souples, dans une direction de transport (19), dans lequel l'appareil de transport (12) comprend ce qui suit :
un premier appareil de convoyage selon l'une quelconque des revendications 1 à 9 ; et
un deuxième appareil de convoyage selon l'une quelconque des revendications 1 à 9,
dans lequel la chaîne de convoyeur (1) du premier appareil de convoyage et la chaîne de convoyeur (1) du deuxième appareil de convoyage sont chacune disposées au moins sensiblement verticalement et s'étendent au moins sensiblement l'une parallèle à l'autre dans une région de transport (13) de l'appareil de transport (12).

12. Appareil de transport (12) selon la revendication 11, dans lequel, lorsqu'elle est vue dans la direction de transport (19) da l'appareil de transport (12), une zone d'entrée d'alimentation (14) est configurée en amont de la région de transport (13), zone d'entrée d'alimentation dans laquelle la chaîne de convoyeur (1) du premier appareil de convoyage et la chaîne de convoyeur (1) du deuxième appareil de convoyage s'étendent obliquement par rapport à la direction de transport (19) dans la direction de la région de transport (13) et forment un entonnoir d'entrée d'alimentation se rétrécissant de préférence de manière conique ; et/ou
dans lequel, lorsqu'elle est vue dans la direction de transport (19) de l'appareil de transport (12), une zone de sortie d'évacuation (15) est configurée en aval de la région de transport (13), zone de sortie d'évacuation dans laquelle la chaîne de convoyeur (1) du premier appareil de convoyage et la chaîne de convoyeur (1) du deuxième appareil de convoyage s'étendent obliquement vers l'extérieur par rapport à la direction de transport (19) et forment un entonnoir de sortie d'évacuation s'élargissant de préférence de manière conique.

13. Machine d'emballage comprenant au moins une et, de préférence, au moins deux installations d'emballage et une table tampon selon la revendication 10 pour stocker temporairement des produits selon les besoins et/ou comprenant un appareil de transport (12) selon la revendication 11 ou 12 pour délivrer et/ou retirer des produits (16) vers et/ou de l'au moins une installation d'emballage.
